# EUROPEAN PATENT APPLICATION

(11) **EP 2 050 797 A1**
(43) Date of publication of application: **22.04.2009**
(21) Application number: 08166614.1
(22) Date of filing: 14.10.2008
(51) Int. Cl.: C09D 175/04

(54) **Method for spray-applying a coat of polyurethane to produce a load surface of a vehicle**

(30) Priority: 15.10.2007 IT TO20070726
(71) Applicant: Selmat Automotive S.p.A. con Unico Socio, 10121 Torino (IT)
(72) Inventor: Maccherrone, Michele c/o SISOLDO, 10123 Torino (IT)
(74) Representative: Jorio, Paolo

(57) **Abstract**

According to the method, a coat of polyurethane is spray-applied to a surface (4) of a moulding die (3) to produce a load surface of a vehicle; a polyol and an isocyanate are introduced into a mixing chamber (36) to form the polyurethane to be sprayed; the temperature and pressure of the polyol and of the isocyanate entering the mixing chamber (36) are adjusted; the temperature of the polyol is adjusted so as to remain within a range of between 40°C and 55°C.

## Description

The present invention relates to a method for spray-applying a coat of polyurethane to produce a load surface of a vehicle.

The production of a load surface defined by a relatively large panel or carpet to cover a floor or base of a luggage compartment of a vehicle is known in the prior art. For example, European patent application EP1164056 describes a panel or carpet comprising a base made of a self-supporting foam material with resistance and stiffness properties such as to support relatively heavy loads.

A sheet of coating is arranged on top of the base. The top surface of said sheet acts as a floor that can be trodden on or loaded, and has a pleasant appearance and/or has a slip-proof function. Said sheet is co-moulded to the base and is made, for example, of cloth, carpeting, needle-punched felt, or of a polymer material commonly known as "imitation leather".

In order to simplify the production process and make the upper side of the load surface washable, there is the need to replace the known co-moulded sheet of coating described above with a coat of polyurethane that is spray-applied.

However, with the spraying processes known in the prior art high-quality results can only be achieved in small sized carpets and panels and when the surfaces to be covered are substantially flat.

The purpose of the present invention is to provide a method for spray-applying a coat of polyurethane to produce a load surface of a vehicle, which overcomes the drawbacks described above in a simple and inexpensive manner.

According to the present invention there is provided a method for spray-applying a coat of polyurethane to produce a load surface of a vehicle; the method comprising the phases of:
- introducing a polyol and an isocyanate into a mixing chamber to form a polyurethane;
- adjusting the pressure at which said polyol and said isocyanate are introduced into said mixing chamber;
- adjusting the temperature of said polyol and of said isocyanate upstream of said mixing chamber;
- spraying said polyurethane onto an upper surface of a forming mould;
characterized in that the temperature of said polyol is adjusted so as to remain within a range of between 40°C and 55°C.

In particular, the temperature of said polyol is adjusted so as to remain within a range of between 44°C and 46°C.

Preferably, the pressure at which said polyol is introduced is adjusted so as to remain within a range of between 150 and 210 bar, in particular within a range of between 200 and 210 bar.

The present invention will now be described with reference to the accompanying drawings, illustrating a non-limiting embodiment thereof, in which:
- figure 1 is a perspective view of a forming assembly for spray-applying a coat of polyurethane to produce a load surface of a vehicle, according to a preferred embodiment of the method of the present invention;
- figure 2 is a diagram of a spraying system to implement the method of the present invention; and
- figures 3 and 4 are schematic cross-section views of a component of figures 1 and 2 in two different operating conditions.

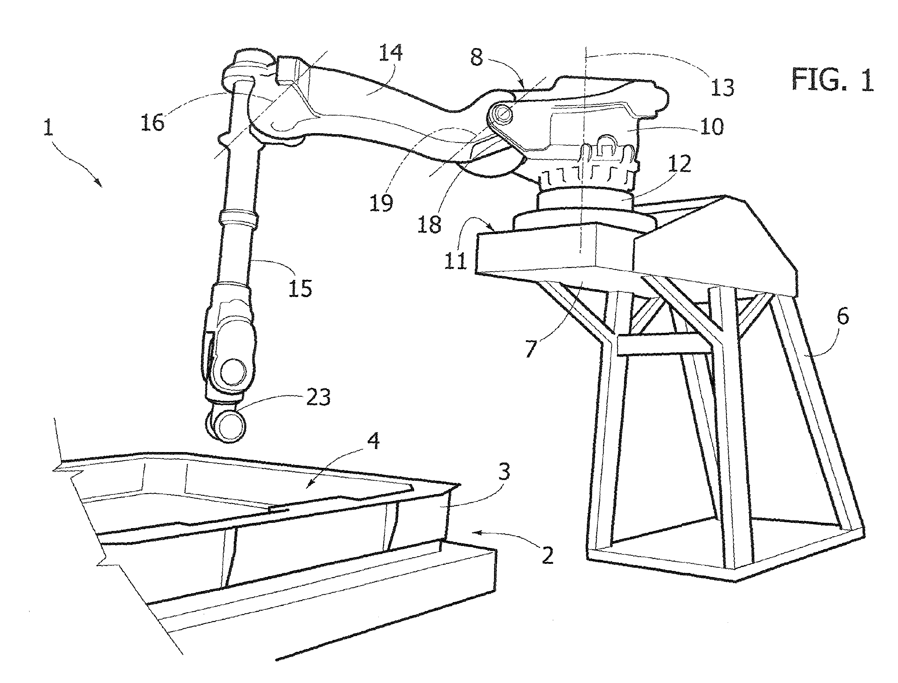

In figure 1 designated as a whole by number 1 is a forming assembly (partially illustrated) for producing a load surface (not illustrated), which can be used to cover a floor of the passenger compartment or of a luggage compartment of a vehicle, or to directly define at least a portion of said load surface or floor.

The assembly 1 comprises a forming mould (partially illustrated) consisting of a lower half-die 3 and an upper half-die (not illustrated), which are movable with respect to one another to remove the finished parts, to perform periodical maintenance and cleaning operations, and to produce a coating of the load surface.

The upper surface of the half-die 3 is indicated by number 4 and has a shape that is complementary or negative with respect to the upper side of the load surface. In other words, the surface 4 has projections, recesses, undercuts (not illustrated), according to the required upper profile of the load surface, and has a roughnesss such as to give the upper side of the load surface an embossed texture.

The assembly 1 comprises a supporting frame 6, arranged alongside the half-die 3 and terminating superiorly with a cantilevered horizontal wall 7. The wall 7 is in a higher position with respect to the half-die 3 and bears a robot 8 having a rotatable supporting portion 10 which is connected to the upper surface 11 of the wall 7 by means of a coupling attachment 12 with vertical axis 13.

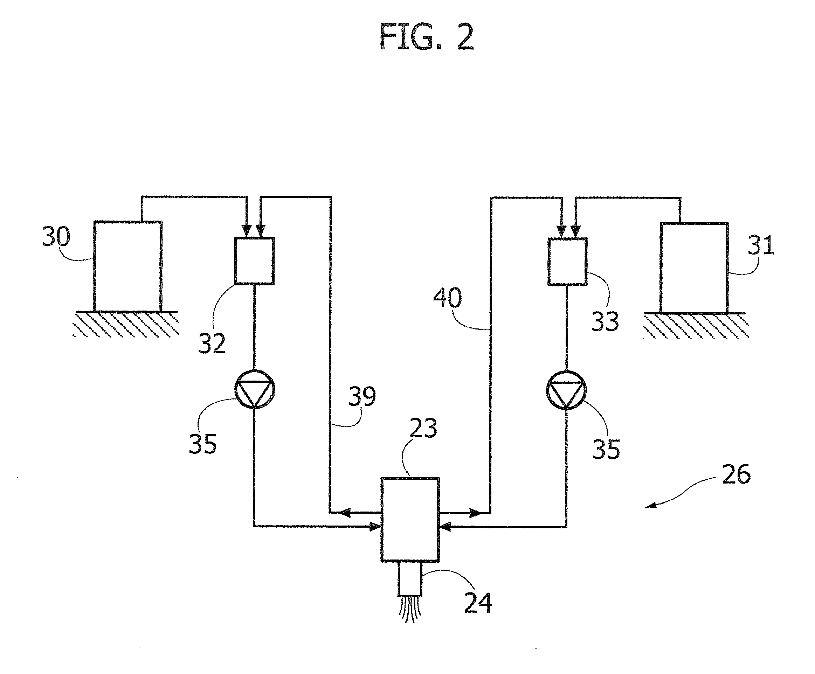

The robot 8 comprises a pair of arms 14 and 15 hinged to one another about an axis 16 that is horizontal and tangential with respect to the axis 13. The arm 14 extends in a cantilevered fashion from the portion 10, in a substantially radial direction with respect to the axis 13, and is connected to the portion 10 by means of a joint 18 which has an axis 19 of rotation that is parallel to the axis 13. The arm 15 extends downwards with respect to the arm 14 and bears, on its extremity, a head 23 (partially illustrated) having a nozzle 24 (schematically illustrated in figure 2) to spray a polyurethane onto the surface 4. In particular, the nozzle 24 can swivel with respect to the arm 15 so that it can spray the surface 4, not only on its horizontal areas, but also on its vertical and sloping areas, facing any direction.

According to the schematic illustration in figure 2, the head 23 is part of a system 26 that synthesizes polyurethane starting from two known reagents, a polyol and an isocyanate, and spray-applies the polyurethane.

The two reagents of the polyurethane used to produce the coating are chosen so that expansion is zero or negligible during the reaction, in order to make the upper side of the load surface feel firm and solid when loaded or trodden on.

The reagents can be chosen from among those commonly used to produce spray-applied integral skins in the production of motor vehicle components, for example:
- as a polyol, a component designated by the trade name Elastoskin® I 4639/112 and distributed by Elastogran;
- as an isocyanate, a polymer containing 4,4'-diphenylmethane diisocyanate, for example a polymer designated by the trade name Iso 144/7 and distributed by Elastogran.

The two reagents are stored in respective tanks 30, 31 and sent from these to respective heat exchangers 32, 33, for example of the water type, which regulate the temperature of the reagents by means of a closed loop control system.

According to the invention, the temperature of the polyol is adjusted so as to remain within a range of between 40°C and 55°C, in order to obtain ideal properties in terms of viscosity and the time required for the polyurethane to solidify on the surface 4. Since slight differences in the temperature of the reagents can result in significant differences in the end properties of the polyurethane, the ideal conditions are obtained by preferably maintaining the temperature of the polyol within a range of between 44°C and 46°C.

Meanwhile, the temperature of the isocyanate is maintained within a range of between 25°C and 35°C; preferably between 26°C and 30°C.

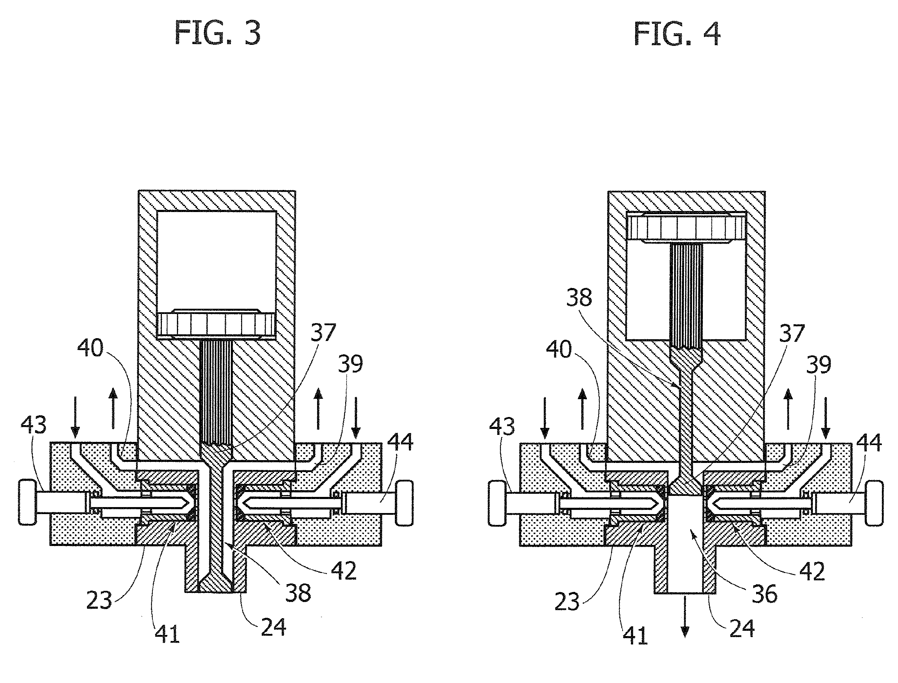

The two reagents are sent from the heat exchangers 32, 33 via respective pumps 35 to a mixing chamber 36 obtained in the head 23 and communicating directly with the outside via the nozzle 24 (figure 4).

According to that illustrated in figures 2 and 3, the nozzle 24 can be closed by sliding a rod 37, which has a shaped lateral surface 38 so as to make the reagents recirculate from the head 24 towards the heat exchangers 32, 33 through respective recirculation lines 39, 40.

According to that illustrated in figures 3 and 4, the pressure at which the reagents are introduced into the chamber 36 can be adjusted by means of respective shutter valves 41, 42. In particular, this adjustment is performed when the rod 37 is in the closed position, by controlling the pressure on pressure gauges arranged along the lines 39, 40 in proximity to the head 24 and acting manually on respective shutters 43, 44.

As for the temperature, the pressure at which the reagents are introduced into the chamber 36 also affects the properties (viscosity, reaction times, etc.) of the polyurethane sprayed onto the surface 4. The pressure of the polyol is set within a range of between 150 and 210 bar, and preferably between 200 and 210 bar. The pressure at which the isocyanate is introduced into the chamber 36 is set slightly lower, for example within a range of between 140 and 200 bar, and preferably between 180 and 190 bar.

The load surface is produced by first spray-applying the layer of coating and then performing an injection moulding process to produce a polyurethane load-bearing layer which will define the lower portion or base of the load surface.

In particular, after removing the upper half-die, a layer of a known demoulding material that is not described in detail is laid or sprayed, for example by hand, on the surface 4, to facilitate the removal of the load surface from the lower half-die 3 after moulding.

The polyurethane of the system 26 is then sprayed through the head 24 to form the coat on the surface 4.

After the spray-application process, the upper half-die is arranged over the half-die, in order to produce, by means of an injection moulding process, the lower load-bearing layer of the load surface. This load-bearing layer is made of structural polyurethane, that is polyurethane with resistance and stiffness properties such as to support relatively heavy loads. By way of example, the reagents to produce the load-bearing layer of the load surface are the following:
- as a polyol, a component designated by the trade name Elastolit® D 8607/100 and distributed by Elastogran;
- as an isocyanate, an oligomer containing 4,4'-diphenylmethane diisocyanate, for example a polymer designated by the trade name IsoPMDI 92140 and distributed by Elastogran.

When the two reagents have been injected and the lower load-bearing layer of the load surface has been moulded, the upper half-die is removed from the lower half-die to remove the finished part.

Thanks to the temperature and pressure ranges chosen for the two reagents of the coating spray-applied to the surface 4, particularly with regard to the polyol, it is possible to obtain a coating with a constant thickness and of excellent quality, even if the surface 4 is relatively large and is provided with undercuts and vertical walls approximately 300 mm high.

The degree of viscosity that is obtained prevents the sprayed material from dripping along the vertical walls, and the reaction times are such as to obtain a uniform appearance on the whole of the surface 4 and, thus, on the whole of the upper side of the load surface.

Lastly, from the above description, it is clear that modifications and variations may be made to the method described herein without departing from the scope of the present invention.

In particular, the polyurethane of the system 26 could be spray-applied on a half-die using a tool other than the robot described by way of example.

## Claims

1. Method for spray-applying a coat of polyurethane to produce a load surface of a vehicle; the method comprising the phases of:
- introducing a polyol and an isocyanate into a mixing chamber (36) to form a polyurethane;
- adjusting the pressure at which said polyol and said isocyanate are introduced into said mixing chamber (36);
- adjusting the temperature of said polyol and of said isocyanate upstream of said mixing chamber (36);
- spraying said polyurethane onto an upper surface (4) of a forming mould (3);
**characterized in that** the temperature of said polyol is adjusted so as to remain within a range of between 40°C and 55°C.

2. Method according to claim 1, **characterized in that** the temperature of said polyol is adjusted so as to remain within a range of between 44°C and 46°C.

3. Method according to claim 1 or 2, **characterized in that** the temperature of said isocyanate is adjusted so as to remain within a range of between 25°C and 35°C.

4. Method according to claim 3, **characterized in that** the temperature of said isocyanate is adjusted so as to remain within a range of between 26°C and 30°C.

5. Method according to any one of the previous claims, **characterized in that** the pressure at which said polyol is introduced is adjusted so as to remain within a range of between 150 and 210 bar.

6. Method according to claim 5, **characterized in that** the pressure at which said polyol is introduced is adjusted so as to remain within a range of between 200 and 210 bar.

7. Method according to any one of the previous claims, **characterized in that** the pressure at which said isocyanate is introduced is adjusted so as to remain within a range of between 140 and 210 bar.

8. Method according to claim 7, **characterized in that** the pressure at which said isocyanate is introduced is adjusted so as to remain within a range of between 180 and 190 bar.
